# EUROPÄISCHE PATENTSCHRIFT

(11) **EP 4 224 037 B1**
(45) Veröffentlichungstag und Bekanntmachung des Hinweises auf die Patenterteilung: **11.09.2024**
(21) Anmeldenummer: 23153721.8
(22) Anmeldetag: 27.01.2023
(51) Int. Cl.: F16H 25/22

(54) **KUGELGEWINDETRIEB, INSBESONDERE FÜR EINE KRAFTFAHRZEUGLENKUNG, UND KRAFTFAHRZEUGLENKUNG**
BALL SCREW DRIVE, IN PARTICULAR FOR A MOTOR VEHICLE STEERING SYSTEM, AND MOTOR VEHICLE STEERING SYSTEM
VIS À BILLES, EN PARTICULIER POUR UNE DIRECTION DE VÉHICULE AUTOMOBILE, ET DIRECTION DE VÉHICULE AUTOMOBILE

(30) Priorität: 03.02.2022 DE 102022201147
(43) Veröffentlichungstag der Anmeldung: 09.08.2023
(73) Patentinhaber: VOLKSWAGEN AG, 38440 Wolfsburg (DE)
(72) Erfinder: Huk, André, 38110 Braunschweig (DE)

(56) Entgegenhaltungen:
- DE-A1- 102009 016 199
- DE-A1- 102010 050 175
- DE-A1- 102016 007 542
- US-B2- 10 865 862
- US-B2- 11 015 688
- US-B2- 9 446 787

## Beschreibung

Die Erfindung betrifft einen Kugelgewindetrieb mit den Merkmalen des Oberbegriffs des unabhängigen Anspruchs 1 sowie eine Kraftfahrzeuglenkung mit einem derartigen Kugelgewindetrieb.

Kugelgewindetriebe oder auch Kugelumlaufspindeln sind aus dem Stand der Technik grundsätzlich bekannt. Beim Kugelgewindetrieb handelt es sich um ein Schraubgetriebe. Über dieses ist die Drehbewegung der Kugelgewindemutter mit einer linearen, bezogen auf die Achse der Gewindemutter axialen Bewegung einer Spindel gekoppelt. Zwischen der Kugelgewindemutter und der Spindel bewegen sich Kugeln in Laufrillen. Beim Drehen der Spindel wandern die Kugeln in axialer Richtung. Daher weisen Kugelgewindetriebe Kugelumlenkungen zur Umlenkung oder auch Rückführung der Kugeln auf. Eine Kugelumlenkung bewirkt, dass die Kugeln, welche sich innerhalb der Gewindemutter auf einer spiralförmigen Bahn relativ zur Gewindemutter bewegen, von einem Ende der spiralförmigen Bewegungsbahn zu deren anderem Ende umgelenkt bzw. zurückgeführt werden. Auf diese Weise wird ein kontinuierlicher Kugelumlauf relativ zur Gewindemutter ermöglicht.

Um einen derartigen Kugelgewindetrieb in technisch sinnvoller Weise einsetzen zu können, ist es jedoch notwendig, ein Drehmoment auf die Kugelgewindemutter zu übertragen. Zu diesem Zweck können Kugelgewindetriebe der in Rede stehenden Art daher auf der Kugelgewindemutter aufgenommene Drehmomentübertragungselemente aufweisen. Nachteilig ist an den nach dem Stand der Technik bekannten Lösungen jedoch, dass sich so eine insgesamt komplexe und raumgreifende Konstruktion ergibt. Dies liegt daran, dass das Drehmomentübertragungselement auf eine geeignete Weise auf der Kugelgewindemutter aufgenommen werden muss, um das Drehmoment auf diese zu übertragen. So muss die Kugelgewindemutter beispielsweise über wenigstens eine durch die Kugeln des Kugelgewindetriebs passierbare Ausnehmung verfügen, um die Umlenkung der Kugeln zu ermöglichen. Zudem bedingt die Notwendigkeit der Kugelumlenkung eine ohnehin bereits komplexe Gestaltung der Kugelgewindemutter.

Da Kugelgewindetriebe der in Rede stehenden Art dennoch positive Eigenschaften aufweisen, beispielsweise sind sie reibungs- und verschleißarm, finden sie dennoch in einer Vielzahl technischer Gebiete Anwendung. Insbesondere werden derartige Kugelgewindetriebe in Lenkungen von Kraftfahrzeugen eingesetzt.

Der Erfindung liegt nun die Aufgabe zugrunde, ein Kugelgewindetrieb der vorstehend beschriebenen Art sowie eine Kraftfahrzeuglenkung mit einem derartigen Kugelgewindetrieb aufzuzeigen, bei dem die vorstehend zum Stand der Technik beschriebenen Nachteile nicht oder zumindest in vermindertem Umfang auftreten.

DE 10 2010 050 175 A1 zeigt eine Kugelgewindemutter, deren Kugelrückführungseinrichtung geteilt ist. Jedes der beiden Teile ist mit einem Endabschnitt in eine Kugeldurchtrittsöffnung eingesteckt. Eine Klammer hält die beiden Teile derart zusammen, dass die Teile durch ihre Verbindung miteinander in den Kugeldurchtrittsöffnungen gehalten sind.

US 9 400 46787 B2 zeigt einen Kugelgewindetriebe, bei dem die Kugelrückführungseinrichtung weitgehend durch eine in der Kugelgewindemutter selbst vorhandene Nut ausgebildet wird. An den Enden der Nut finden sich Umlenkelemente, die in entsprechende von den umgelenkten Kugeln passierte Ausnehmungen in der Kugelgewindemutter eingesetzt werden. Dabei werden die Umlenkelement derart tief in den Ausnehmungen versenkt, dass diese praktisch nicht aus dem Umriss der Kugelgewindemutter hervortreten.

DE 10 2009 016 199 zeigt einen Kugelgewindetriebe, bei dem die Kugelmutter eine von den umgelenkten Kugeln passierte Ausnehmung aufweist, in die ein Umlenkkörper eingesetzt ist. Durch ein auf die Kugelmutter aufgesetztes Riemenrad wird der Umlenkkörper in der Ausnehmung fixiert.

Auch die US 11 015 688 B2, die DE 10 2016 007 542 A1 und US 10 865 862 B2 zeigen Kugelgewindetriebe, bei denen eine Kugelumlenkeinrichtung an der Kugelgewindemutter befestigt ist.

Die Aufgabe wird gelöst durch einen Kugelgewindetrieb und eine Kraftfahrzeuglenkung mit den Merkmalen der unabhängigen Ansprüche. Die Merkmale der abhängigen Ansprüche betreffen vorteilhafte Ausführungsformen.

Der Kugelgewindetrieb weist eine Kugelgewindemutter auf. Auf der Kugelgewindemutter ist ein Drehmomentübertragungselement zur Übertragung eines Drehmoments auf die Kugelgewindemutter aufgenommen. Das Drehmomentübertragungselement kann Bestandteil eines Zugmitteltriebes sein. Insbesondere handelt es sich um eine Riemenscheibe eines Riementriebs.

Die Gewindemutter weist wenigstens eine durch Kugeln des Kugelgewindetriebs zum Zweck der Umlenkung dieser Kugeln passierbare Ausnehmung auf, wobei der Kugelgewindetrieb eine Kugelumlenkung zur Umlenkung der Kugeln aufweist. Die Kugelumlenkung kann hierbei teilweise in der wenigstens einen durch die Kugeln passierbaren Ausnehmung aufgenommen sein und so einen Kanal oder zumindest einen Abschnitt eines Kanals ausbilden, in dem die Kugeln die Ausnehmung passieren. Alternativ und/oder ergänzend kann die Kugelumlenkung gemeinsam mit der Ausnehmung den Kanal und/oder den Abschnitt des Kanals ausbilden, mit anderen Worten, die Oberfläche des die Kugeln umlenkenden Kanals kann zumindest abschnittsweise auch durch die Gewindemutter selbst gebildet sein, die diesbezüglich zur Ausbildung der Oberfläche des die Kugeln führenden Kanals mit der Kugelumlenkung zusammenwirkt.

Die Aufgabe wird insbesondere dadurch gelöst, dass die Kugelumlenkung Bestandteil einer Welle-Nabe-Verbindung zwischen der Kugelmutter und dem Drehmomentübertragungselement ist. Dadurch, dass die Kugelumlenkung Bestandteil der Welle-Nabe-Verbindung ist, wird zum einen ein kompakterer Aufbau des Kugelgewindetriebs ermöglicht, zum anderen ergibt sich eine kostengünstige Gestaltung, da die Kugelumlenkung neben dem Umlenken der Kugeln eine zusätzliche Funktion als Bestandteil der Welle-Nabe-Verbindung zwischen der Kugelgewindemutter und dem Drehmomentübertragungselement erfüllt.

Die Kugelumlenkung ist zur Fixierung des Drehmomentübertragungselements in einer Gebrauchsposition in axialer Richtung bezogen auf die Achse der Kugelgewindemutter ausgebildet. Unter der Gebrauchsposition ist diejenige Position zu verstehen, in der sich das Drehmomentübertragungselement auf der Kugelgewindemutter befindet, wenn der Kugelgewindetrieb bestimmungsgemäß betrieben wird. Mit anderen Worten handelt es sich um die Position, in der sich das Drehmomentübertragungselement nach Abschluss seiner Montage auf der Kugelgewindemutter befindet.

Wird das Drehmomentübertragungselement in seiner Gebrauchsposition in bezogen auf die Achse der Kugelgewindemutter axialer Richtung durch die Kugelumlenkung fixiert, so kann im günstigsten Falle eine zusätzliche axiale Fixierung des Drehmomentübertragungselements entfallen. Der Kugelgewindetrieb lässt sich dadurch konstruktiv einfacher und damit kostengünstiger gestalten.

Die Kugelumlenkung weist einen Sicherungsbereich auf. Der Sicherungsbereich ist dazu ausgebildet, beim Aufbringen des Drehmomentübertragungselements auf die Kugelgewindemutter zunächst entgegen einer elastischen Rückstellkraft aus einer Ausgangsposition verdrängt zu werden. Bei dem Aufbringen des Drehmomentübertragungselements auf die Kugelgewindemutter kann es sich insbesondere um ein Aufschieben des Drehmomentübertragungselements auf die Kugelgewindemutter handeln. Das Aufbringen des Drehmomentübertragungselements auf die Kugelgewindemutter kann insbesondere in bezogen auf die Kugelgewindemutter axialer Richtung erfolgen. Der Sicherungsbereich ist dazu ausgebildet, dass er beim Erreichen der Gebrauchsposition durch das Drehmomentübertragungselement aufgrund der elastischen Rückstellkraft eine Sicherungsposition einnimmt. In der Sicherungsposition fixiert das Sicherungselement das Drehmomentübertragungselement formschlüssig in seiner Gebrauchsposition in bezogen auf die Kugelgewindemutter axialer Richtung.

Ein derartig gestalteter Sicherungsbereich ermöglicht eine einfache Fixierung des Drehmomentübertragungselements im Rahmen seiner Montage auf der Kugelgewindemutter. Der Sicherungsbereich wird bei der Montage insbesondere durch das an dem Sicherungsbereich entlang gleitende Drehmomentübertragungselement zunächst aus seiner Ruhelage verdrängt. Das Verdrängen aus der Ruhelage kann insbesondere in einer zur Richtung, in der das Drehmomentübertragungselement auf die Kugelgewindemutter aufgebracht wird, zumindest im Wesentlichen senkrechten Richtung erfolgen. Hierbei wird die elastische Rückstellkraft erzeugt. Beim Erreichen der Gebrauchsposition nimmt das Sicherungselement die Sicherungsposition ein. Dabei kann es beispielsweise bezogen auf die Richtung des Aufbringens des Drehmomentübertragungselements eine Hinterschneidung mit diesem ausbilden und so den Formschluss zur Fixierung des Drehmomentübertragungselements in seiner Gebrauchsposition erzeugen. Bei der Sicherungsposition, die das Sicherungselement aufgrund der elastischen Rückstellkraft einnimmt, kann es sich insbesondere um seine Ausgangsposition handeln. Es kann sich jedoch auch um eine von der Ausgangsposition abweichende Sicherungsposition handeln, beispielsweise wenn das Sicherungselement aufgrund seiner elastischen Rückstellkraft eine Position in einer Formschlusskontur des Drehmomentübertragungselements einnimmt, die dazu ausgebildet ist, mit dem Sicherungselement zur Bildung des Formschlusses zusammenzuwirken.

Mit anderen Worten erfolgt die Fixierung des Drehmomentübertragungselements auf der Kugelgewindemutter insbesondere nach Art einer Schnappverbindung und/oder nach Art einer Rastverbindung.

Der Sicherungsbereich kann an die Kugelumlenkung angeformt sein. Insbesondere kann die elastische Rückstellkraft durch die Verformung eines Verbindungsbereichs, der den Sicherungsbereich mit der Kugelumlenkung verbindet, erzeugt werden. Ein derartiger zur Erzeugung der elastischen Verformung ausgebildeter Verbindungsbereich stellt, insbesondere im Zusammenhang mit einem an die Kugelumlenkung angeformten Sicherungsbereich, eine kostengünstige Möglichkeit dar, die Fixierung des Drehmomentübertragungselements mittels des Sicherungsbereichs konstruktiv zu ermöglichen.

Der Kugelgewindetrieb ist insbesondere derart gestaltet, dass der Sicherungsbereich in Umfangsrichtung bezogen auf die Achse der Kugelgewindemutter aus der Ausgangsposition verdrängt wird. Dabei bewegt sich der Sicherungsbereich insbesondere an der Oberfläche der Kugelgewindemutter entlang. Eine derartige Ausgestaltung ermöglicht es, die Sicherungsfunktion des Sicherungsbereichs auf engem Raum zu realisieren, wobei die Ausweichbewegung des Sicherungsbereichs in einem kleinen Raumbereich zwischen dem Drehmomentübertragungselement und der Kugelgewindemutter erfolgen kann.

Die Kugelumlenkung kann zur Befestigung der Kugelumlenkung an der Kugelgewindemutter wenigstens einen an die Kugelumlenkung angeformten Befestigungsbereich aufweisen, der in eine Vertiefung in der Kugelgewindemutter eingreift. Die Vertiefung ist hierbei von der wenigstens einen durch die Kugel passierbaren Ausnehmung räumlich getrennt.

Ein derartiger angeformter Befestigungsbereich stellt eine kostengünstige Möglichkeit dar, die Kugelumlenkung an der Kugelgewindemutter zu befestigen. Die räumliche Trennung der Vertiefung, in die der Befestigungsbereich beim Befestigen der Kugelumlenkung an der Kugelgewindemutter eingreift, bietet den zusätzlichen Vorteil, dass die Geometrie von Befestigungsbereich und/oder Vertiefung im Hinblick auf die Befestigung der Kugelumlenkung optimiert werden kann. Eine durch die Kugeln zu passierende Ausnehmung hingegen kann unabhängig davon im Hinblick auf eine optimierte Geometrie der Kugelführung optimiert werden. Es hat sich im Zusammenhang mit der vorliegenden Erfindung gezeigt, dass eine derartige Gestaltung den Mehraufwand für eine weitere Vertiefung in der Kugelgewindemutter bei weitem übersteigt.

In vorteilhafter Weise kann die Vertiefung als Bohrung ausgestaltet sein. Der Vorteil der Ausgestaltung der Vertiefung als Bohrung ist der, dass eine Bohrung sehr kostengünstig erzeugt werden kann. Die Befestigung der Kugelumlenkung, die durch den in die Vertiefung eingreifenden Befestigungsbereich realisiert wird, dient insbesondere als Verliersicherung für den Zeitraum zwischen der Befestigung der Kugelumlenkung an der Kugelgewindemutter und der Befestigung des Drehmomentübertragungselements auf der Gewindemutter während der Montage des Kugelgewindetriebs. Alternativ und/oder ergänzend kann der Kugelgewindetrieb derart gestaltet sein, dass bei auf der Kugelgewindemutter in der Gebrauchsposition aufgenommenem Drehmomentübertragungselement die Kugelumlenkung zusätzlich durch das Drehmomentübertragungselement auf der Gewindemutter fixiert wird. Das Zusammenwirken des in die Vertiefung eingreifenden angeformten Befestigungsbereichs in seiner primären Funktion als Verliersicherung mit einer derartigen Fixierung der Kugelumlenkung durch das Drehmomentübertragungselement ist besonders vorteilhaft, da so eine einfache und kostengünstige Montage ermöglicht wird, gleichzeitig die im Betrieb auf die Kugelumlenkung einwirkenden Kräfte aufgrund der zusätzlichen Fixierung durch das Drehmomentübertragungselement sicher aufgenommen werden können.

Der Befestigungsbereich kann in der Vertiefung durch einen Kraftschluss befestigt sein. Die Befestigung in der Vertiefung durch einen Kraftschluss bietet den Vorteil, das zur Ausbildung des Kraftschlusses keine hohen Anforderungen an die Gestaltung der zusammenwirkenden Konturen bestehen. Dadurch kann der Kraftschluss zwischen Befestigungsbereich und Vertiefung beispielsweise auch dann erzeugt werden, wenn es sich bei der Vertiefung um eine Bohrung mit entsprechend glatten bzw. konturlosen Wänden handelt, die an der Bildung des Kraftschlusses beteiligt sind.

Der Befestigungsbereich wird dabei beim Befestigen der Kugelumlenkung an der Kugelgewindemutter insbesondere unter Erzeugung einer Rückstellkraft elastisch verformt. Durch die Rückstellkraft wird der Kraftschluss bewirkt. Durch eine elastische Verformung des Befestigungsbereichs lässt sich ein Kraftschluss zum Befestigen der Kugelumlenkung an der Kugelgewindemutter in einfacher Weise realisieren.

Die Kugelumlenkung kann mehrteilig ausgebildet sein. Dabei können wenigstens zwei Teile der Kugelumlenkung gemeinsam wenigstens einen Abschnitt eines die Kugel führenden Kanals bilden. Durch eine derartige mehrteilige Gestaltung kann die Kugelumlenkung in vorteilhafter Weise hergestellt werden. Insbesondere kann der für die Führung der Kugeln notwendige Kanal in der Kugelrückführung auf vorteilhafte Weise erzeugt werden, wenn der Kanal durch das Zusammenwirken einer Mehrzahl Teile der Kugelumlenkung gebildet wird. Die Kugelumlenkung bzw. die Teile der Kugelumlenkung können im Spritzgussverfahren hergestellt werden. Durch die mehrteilige Gestaltung der Kugelumlenkung lässt sich die Herstellung der Kugelumlenkung insbesondere mittels eines Spritzgussverfahrens erheblich vereinfachen. Ein erstes der beiden Teile kann mittels des zweiten der beiden Teile an der Gewindemutter befestigt sein. Hierdurch können beide Teile mit lediglich einem Befestigungsbereich, das an dem zweiten der beiden Teile angeformt ist, an der Gewindemutter befestigt werden. In die Gewindemutter muss in diesem Fall lediglich eine Vertiefung eingebracht werden, um beide Teile an der Gewindemutter mittels dieser Vertiefung befestigen zu können.

Die Kugelumlenkung kann dazu ausgebildet sein, ein Drehmoment von dem Drehmomentübertragungselement auf die Kugelgewindemutter zu übertragen. Die Übertragung eines Drehmoments vom Drehmomentübertragungselement auf die Kugelgewindemutter mittels der Kugelumlenkung kann es im günstigsten Fall ermöglichen, dass auf weitere Elemente der Verbindung zwischen Drehmomentübertragungselement und Kugelgewindemutter, die der Übertragung eines Drehmoments vom Drehmomentübertragungselement auf die Kugelgewindemutter dienen, verzichtet werden kann.

Der Kugelgewindetrieb ist insbesondere derart gestaltet, dass zumindest ein Teil des Drehmoments, das durch die Kugelumlenkung übertragen wird, über den wenigstens einen Befestigungsbereich von der Kugelumlenkung auf die Kugelgewindemutter übertragen wird. Eine derartige Übertragung des Drehmoments bietet den Vorteil, dass das Drehmoment, das über den wenigstens einen Befestigungsbereich in die Kugelgewindemutter eingeleitet wird, nicht über Bereiche der Kugelumlenkung in die Kugelgewindemutter eingeleitet wird, die unmittelbar an den Kanal zur Führung der Kugeln angrenzen. Dieser wird somit im Hinblick auf die Drehmomentübertragung entlastet und mögliche negative Einflüsse auf den Lauf der Kugeln können so vermieden werden. In diesem Zusammenhang kann insbesondere das gesamte durch die Kugelumlenkung übertragene Drehmoment über den wenigstens einen Befestigungsbereich von der Kugelumlenkung auf die Kugelgewindemutter übertragen werden.

Im Hinblick auf die Einleitung des Drehmoments in die Kugelgewindemutter über den Befestigungsbereich ist es vorteilhaft, wenn der Befestigungsbereich räumlich zwischen dem Kanal zur Führung der Kugeln in der Kugelumlenkung und dem Ort der Einleitung des Drehmoments vom Übertragungselement in die Kugelumlenkung angeordnet ist. Bei einer derartigen geometrischen Anordnung können die zur Weiterleitung des Drehmoments notwendigerweise in der Kugelumlenkung erzeugten Materialspannungen zumindest weitgehend vom Kanal ferngehalten werden.

Bei der Kugelumlenkung kann es sich um ein Kunststoffteil handeln. Insbesondere sind Teile einer mehrteiligen Kugelumlenkung, insbesondere das erste und das zweite Teil der Kugelumlenkung, die gemeinsam wenigstens einen Abschnitt des die Kugel führenden Kanals bilden, aus Kunststoff. Es hat sich gezeigt, dass in vielen Anwendungsfällen die vorstehend beschriebenen Funktionen der Kugelumlenkung als Bestandteil der Welle-Nabe-Verbindung auch mit einer Kugelumlenkung aus Kunststoff realisiert werden können. Die Gestaltung als Kunststoffteil erlaubt insbesondere eine kostengünstige Herstellung, wobei er insbesondere auch komplizierte Merkmale der Geometrie, beispielsweise mittels Spritzgussverfahren, wirtschaftlich dargestellt werden können.

Der Kugelgewindetriebe kann Bestandteil einer Kraftfahrzeuglenkung sein. Die Kraftfahrzeuglenkung weist dann einen vorstehend beschriebenen Kugelgewindetrieb auf. Weiterhin weist die Kraftfahrzeuglenkung einen elektrischen Antrieb zum Bewirken und/oder Unterstützen der Lenkbewegung auf. Der elektrische Antrieb kann bei einer derartigen Kraftfahrzeuglenkung sein Drehmoment über das Drehmomentübertragungselement auf die Kugelgewindemutter übertragen, die das Drehmoment wiederum auf die Spindel des Kugelgewindetriebs überträgt. Bei einer derartigen Anordnung kann der elektrische Antrieb vorzugsweise mit seiner Rotationsachse parallel zu der Spindel des Kugelgewindetriebs, die insbesondere im Rahmen der Lenkbewegung in Kraftfahrzeugquerrichtung bewegt wird, angeordnet sein. Dadurch ergibt sich eine kompakte Anordnung, die sich insbesondere durch die Verwendung eines vorstehend beschriebenen Kugelgewindetriebs kostengünstig realisieren lässt.

Weitere praktische Ausführungsformen der Erfindung sind nachfolgend im Zusammenhang mit den Zeichnungen beschrieben. Es zeigen:
- Fig. 1: einen beispielhaften Kugelgewindetrieb,
- Fig. 2: einen Ausschnitt des Kugelgewindebetriebs aus Figur 1 mit auf der Kugelgewindemutter aufgenommenem Drehmomentübertragungselement,
- Fig. 3: eine Schnittdarstellung eines Kugelgewindetriebs mit darauf aufgenommenem Drehmomentübertragungselement nach einer weiteren Ausführungsform

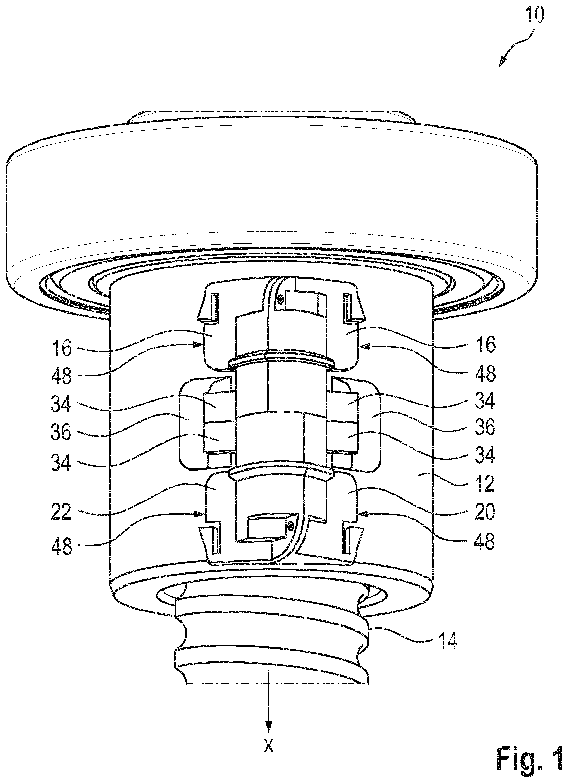

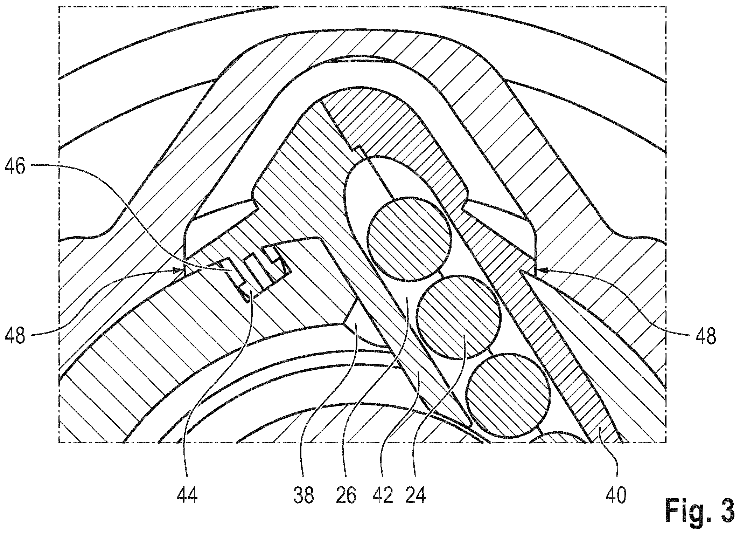

Der beispielhafte dargestellte Kugelgewindetrieb 10 weist eine Kugelgewindemutter 12 und eine Spindel 14 auf. Wie in Figur 1 beispielhaft dargestellt, kann die Kugelumlenkung des Kugelgewindetriebs 10 mehrteilig ausgebildet sein und aus den Teilen 16, 18, 20 und 22 zusammengesetzt sein. In Figur 1 bilden beispielhaft ein Teil 16 und ein Teil 18 gemeinsam einen Abschnitt eines die Kugeln 24 führenden Kanals 26 aus. In dem in Figur 1 dargestellten Beispiel sind Kugeln 24 und Kanal 26 aus darstellungstechnischen Gründen nicht sichtbar. Zur beispielhaften Veranschaulichung einer möglichen Ausgestaltung kann jedoch das in Figur 3 dargestellte Ausführungsbeispiel, in dem Kugeln 24 und Kanal 26 sichtbar sind, herangezogen werden. Ein weiterer Abschnitt des Kanals 26 wird in dem in Figur 1 gezeigten Beispiel durch das Teil 20 und das Teil 22 gebildet. Wie in dem in Figur 1 gezeigten Beispiel können Teile der Kugelumlenkung identisch gestaltet sein. So sind im gezeigten Beispiel die Teile 16 und 22 identisch ausgebildet. Die Teile 18 und 20 sind ebenfalls identisch ausgebildet. Dies ermöglicht die Verwendung von Gleichteilen wie in der beispielhaften Anordnung der Teile 16, 18, 20 und 22 in Figur 1.

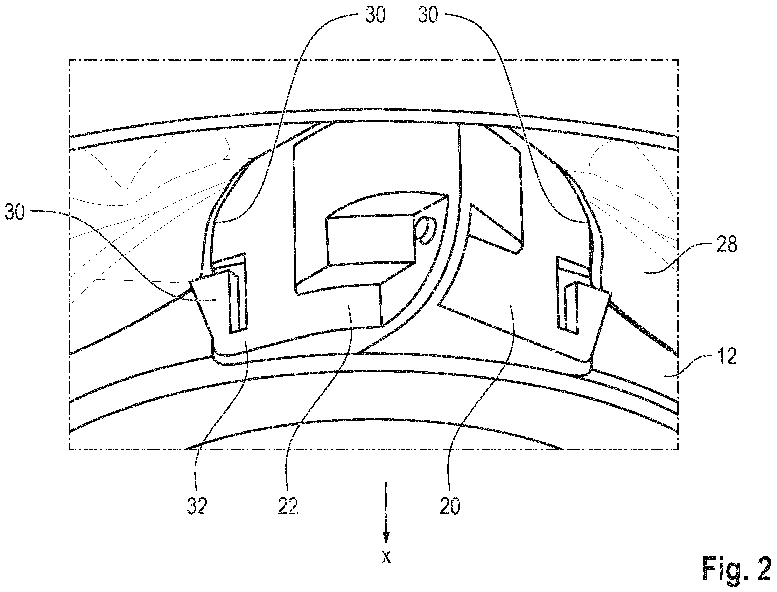

Auf der Kugelgewindemutter 12 ist ein Drehmomentübertragungselement 28 aufgenommen. Dies ist beispielhaft in der Figur 2 dargestellt. Bei dem Drehmomentübertragungselement 28 kann es sich wie in dem in Figur 2 gezeigten Beispiel um eine Riemenscheibe handeln. Zum Zwecke der besseren Darstellung ist in Figur 2 das Drehmomentübertragungselement 28 entlang der Bruchlinie 29 darstellungstechnisch aufgebrochen, um eine bessere Sicht auf die Teile 20 und 22 der Kugelumlenkung zu ermöglichen. Wie aus der Darstellung in Figur 2 ersichtlich, ist die Kugelumlenkung Bestandteil der Welle-Nabe-Verbindung zwischen der Kugelgewindemutter 12 und dem Drehmomentübertragungselement 28.

Wie im gezeigten Beispiel weist die Kugelumlenkung einen Sicherungsbereich 30 auf. Der Sicherungsbereich 30 dient zur Fixierung des Drehmomentübertragungselements 28 in bezogen auf die Achse der Kugelgewindemutter axialer Richtung X. Durch den Sicherungsbereich 30 wird das Drehmomentübertragungselement 28 in seiner Gebrauchsposition fixiert.

Wie im gezeigten Beispiel ist der Sicherungsbereich 30 dazu ausgebildet sein, beim Aufbringen des Drehmomentübertragungselements 28 auf die Kugelgewindemutter 12 zunächst entgegen einer elastischen Rückstellkraft aus einer Ausgangsposition verdrängt zu werden. Dies kann wie im gezeigten Beispiel durch die elastische Verformung eines Verbindungsbereichs 32 ermöglicht werden. Wie im Fall der beispielhaft dargestellten Ausführungsform kann der Sicherungsbereich 30 mit dem Verbindungsbereich 32 an die Kugelumlenkung angeformt sein. Wenn der beispielhaft dargestellte Sicherungsbereich 30 aus seiner Ausgangsposition verdrängt wird, erfolgt dies beispielhaft in Umfangsrichtung der Kugelgewindemutter 12. Hierbei kann sich der Sicherungsbereich 30 wie im gezeigten Beispiel an der Oberfläche der Gewindemutter 12 entlang bewegen.

Erreicht das Drehmomentübertragungselement 28 beim Aufbringen auf die Kugelgewindemutter 12 seine Gebrauchsposition, so nimmt der Sicherungsbereich 30 die in Figur 2 dargestellte Sicherungsposition ein, die im gezeigten Beispiel identisch mit der Ausgangsposition des Sicherungsbereichs 30, die beispielsweise in Figur 1 dargestellt ist, ist. Wie im gezeigten Beispiel kann der Kugelgewindetrieb 10 eine Mehrzahl entsprechend gestalteter Sicherungsbereiche 30 aufweisen.

Zur Befestigung der Kugelumlenkung an der Kugelgewindemutter 12 kann die Kugelumlenkung wenigstens einen an die Kugelumlenkung angeformten Befestigungsbereich 34 aufweisen, der in eine Vertiefung 36 eingreift. Dies ist beispielhaft im Fall der in Figur 1 dargestellten Ausführungsform der Fall. Dort ist beispielhaft an jedes der Teile 16, 18, 20 und 22 ein entsprechender Befestigungsbereich 34 angeformt. Im gezeigten Beispiel greifen beispielhaft jeweils zwei Befestigungsbereiche 34 zweier unterschiedlicher Teile 16, 18, 20 oder 22 in eine Vertiefung 36 ein. Die Vertiefungen 36 sind dabei räumlich von durch die Kugeln 24 passierbaren Ausnehmungen 38 in der Kugelgewindemutter 12 getrennt. Aus darstellungstechnischen Gründen sind die Ausnehmungen 38 im Falle der in Figur 1 beispielhaft dargestellten Kugelgewindemutter 12 nicht sichtbar.

Im Falle der in Figur 3 dargestellten Ausführungsform ist eine der durch die Kugeln 24 passierbaren Ausnehmungen 38 des dort gezeigten Ausführungsbeispiels sichtbar. Wie in Figur 3 beispielhaft dargestellt, kann ein Kanal 26 zur Führung der Kugeln 24, der durch die Kugelumlenkung gebildet wird, zumindest teilweise innerhalb einer Ausnehmung 38 angeordnet sein. Dadurch lässt sich die Führung der Kugeln 24 bei deren Umlenkung konstruktiv sinnvoll realisieren. Wie in dem in Figur 3 gezeigten Beispiel kann hierbei der innerhalb der Ausnehmung 38 angeordnete Abschnitt des Kanals 26 durch zwei Teile 40 und 42 der Kugelumlenkung gebildet sein.

Im Fall des in Figur drei dargestellten Beispiels ist das erste Teil 40 der Kugelumlenkung durch das zweite Teil 42 der Kugelumlenkung an der Kugelgewindemutter 12 befestigt. Dies kann wie im dargestellten Beispiel dadurch realisiert sein, dass das erste Teil 40 und das zweite Teil 42 der Kugelumlenkung miteinander verbunden sind, beispielsweise durch ineinandergreifende komplementäre Verbindungselemente, die insbesondere an die Teile 40 und 42 der Kugelumlenkung angeformt sind.

Wie beispielhaft in Figur 3 dargestellt, kann ein an dem zweiten Teil 42 der Kugelumlenkung angeformter Befestigungsbereich 44 in eine Vertiefung 46 eingreifen, die räumlich von Ausnehmungen 38, die durch die Kugeln 24 passierbar sind, getrennt ist. Im gezeigten Beispiel kann die Vertiefung 46 als Bohrung ausgestaltet sein. Der Befestigungsbereich 44 kann wie beispielhaft dargestellt kraftschlüssig in der Vertiefung 46 befestigt sein. Im gezeigten Beispiel wird dies dadurch ermöglicht, dass der Befestigungsbereich 44 beim Befestigen der Kugelumlenkung an der Kugelgewindemutter 12 unter Erzeugung eine Rückstellkraft elastisch verformt wird.

Die beispielhaft dargestellten Kugelumlenkungen sind dazu ausgebildet, ein Drehmoment von dem Drehmomentübertragungselement 28 auf die Kugelgewindemutter 12 zu übertragen. Um dies zu ermöglichen, können die Kugelumlenkungen Anlageflächen 48 aufweisen. Diese können wie im gezeigten Beispiel zumindest im Wesentlichen in Umfangsrichtung der Kugelgewindemutter 12 orientiert sein.

Die Befestigungsbereiche 34 und 44 können wie in den Zeichnungen dargestellt derart gestaltet sein, dass ein Drehmoment von der Kugelumlenkung über die Befestigungsbereiche 34, 44 auf die Kugelgewindemutter 12 übertragen werden kann. Dabei können die Kugelgewindetriebe 10 insbesondere so gestaltet sein, dass das gesamte durch die Kugelumlenkung auf die Kugelgewindemutter 12 übertragene Drehmoment über die jeweiligen Befestigungsbereiche 34 und 44 übertragen wird. Dies kann insbesondere dadurch bewirkt werden, dass Bereiche der Kugelumlenkung, die in Ausnehmungen 38 eingreifen und insbesondere den Kanal 26 zur Führung der Kugeln 24 bilden, ein hinreichendes Spiel in Bezug auf die jeweilige Ausnehmung 38 aufweisen. Durch ein hinreichendes Spiel zwischen Ausnehmung und Kugelumlenkung wird verhindert, dass durch einen in eine Ausnehmung 38 hineinreichenden Bereich der Kugelumlenkung ebenfalls ein Drehmoment übertragen wird und durch die dadurch im entsprechenden Bereich des Kanals 26 wirkenden Kräfte der Kugelumlauf negativ beeinträchtigt wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Kugelgewindetrieb
- 12: Kugelgewindemutter
- 14: Spindel
- 16: Teil des Kugelgewindetriebs
- 18: Teil des Kugelgewindetriebs
- 20: Teil des Kugelgewindetriebs
- 22: Teil des Kugelgewindetriebs
- 24: Kugel
- 26: Kanal
- 28: Drehmomentübertragungselement
- 29: Bruchlinie
- 30: Sicherungsbereich
- 32: Verbindungsbereich
- 34: Befestigungsbereich
- 36: Vertiefung
- 38: Ausnehmungen
- 40: erstes Teil der Kugelumlenkung
- 42: zweites Teil der Kugelumlenkung
- 44: Befestigungsbereich
- 46: Vertiefung

- X: Richtung

## Patentansprüche

1. Kugelgewindetrieb (10) mit einer Kugelgewindemutter (12) und einem auf der Kugelgewindemutter (12) aufgenommenem Drehmomentübertragungselement (28), insbesondere eine Riemenscheibe, zur Übertragung eines Drehmoments auf die Kugelgewindemutter (12), wobei die Kugelgewindemutter (12) wenigstens eine durch Kugeln (24) des Kugelgewindetriebs (10) zum Zweck der Umlenkung dieser Kugeln (24) passierbare Ausnehmung (38) aufweist, wobei der Kugelgewindetrieb (10) eine Kugelumlenkung zur Umlenkung der Kugeln (24) aufweist, wobei die Kugelumlenkung Bestandteil einer Welle-Nabe-Verbindung zwischen der Kugelgewindemutter (12) und dem Drehmomentübertragungselement (28) ist, wobei die Kugelumlenkung zur Fixierung des Drehmomentübertragungselements (28) in einer Gebrauchsposition in axialer Richtung bezogen auf die Achse der Kugelgewindemutter (12) ausgebildet ist, **dadurch gekennzeichnet, dass** die Kugelumlenkung einen Sicherungsbereich (30) aufweist, der dazu ausgebildet ist, beim Aufbringen des Drehmomentübertragungselements (28) auf die Kugelgewindemutter (12) zunächst entgegen einer elastischen Rückstellkraft aus einer Ausgangsposition verdrängt zu werden und beim Erreichen der Gebrauchsposition durch das Drehmomentübertragungselement (28) aufgrund der elastischen Rückstellkraft eine Sicherungsposition einzunehmen und so das Drehmomentübertragungselement (28) formschlüssig in seiner Gebrauchsposition in bezogen auf die Kugelgewindemutter (12) axialer Richtung zu fixieren.

2. Kugelgewindetrieb (10) nach Anspruch 1, **dadurch gekennzeichnet, dass** der Sicherungsbereich (30) an die Kugelumlenkung angeformt ist und die elastische Rückstellkraft durch die elastische Verformung eines Verbindungsbereichs (32), der den Sicherungsbereich (30) mit der Kugelumlenkung verbindet, erzeugt wird.

3. Kugelgewindetrieb (10) nach Anspruch 1 oder 2, **dadurch gekennzeichnet, dass** der Kugelgewindetrieb (10) derart gestaltet ist, dass der Sicherungsbereich (30) in Umfangsrichtung bezogen auf die Achse der Kugelgewindemutter (12) aus der Ausgangsposition verdrängt wird.

4. Kugelgewindetrieb (10) nach einem der vorigen Ansprüche, **dadurch gekennzeichnet, dass** die Kugelumlenkung zur Befestigung der Kugelumlenkung an der Kugelgewindemutter (12) wenigstens einen an die Kugelumlenkung angeformten Befestigungsbereich (34) aufweist, der in eine Vertiefung (36) in der Kugelgewindemutter (12), die von der wenigstens einen durch die Kugeln (24) passierbaren Ausnehmung (38) räumlich getrennt ist, eingreift.

5. Kugelgewindetrieb (10) nach Anspruch 4, **dadurch gekennzeichnet, dass** der Befestigungsbereich (34) in der Vertiefung (36) durch einen Kraftschluss befestigt ist, wobei der Befestigungsbereich (34) beim Befestigen der Kugelumlenkung an der Kugelgewindemutter (12) unter Erzeugung einer Rückstellkraft elastisch verformt und durch die Rückstellkraft der Kraftschluss bewirkt wird.

6. Kugelgewindetrieb (10) nach Anspruch 4 oder 5, **dadurch gekennzeichnet, dass** die Kugelumlenkung mehrteilig ausgebildet ist, wobei wenigstens zwei Teile (16, 18, 20, 22, 40, 42) der Kugelumlenkung gemeinsam wenigstens einen Abschnitt eines die Kugeln (24) führenden Kanals (26) bilden, wobei ein erstes der beiden Teile (40) mittels des zweiten der beiden Teile (42) an der Kugelgewindemutter (12) befestigt ist.

7. Kugelgewindetrieb (10) nach einem der Ansprüche 4 bis 6, **dadurch gekennzeichnet, dass** die Kugelumlenkung dazu ausgebildet ist, ein Drehmoment von dem Drehmomentübertragungselement (28) auf die Kugelgewindemutter (12) zu übertragen, wobei der Kugelgewindetrieb (10) derart gestaltet ist, dass zumindest ein Teil des Drehmoments, das durch die Kugelumlenkung übertragen wird, über den wenigstens einen Befestigungsbereich (34) von der Kugelumlenkung auf die Kugelgewindemutter (12) übertragen wird.

8. Kraftfahrzeuglenkung mit einem Kugelgewindetrieb (10) nach einem der vorigen Ansprüche und einem elektrischen Antrieb zum Bewirken und/oder unterstützen der Lenkbewegung.

## Claims

1. Ball screw drive (10) having a ball screw nut (12) and a torque-transmission element (28), in particular a pulley, which is received on the ball screw nut (12) and is intended to transmit a torque to the ball screw nut (12), wherein the ball screw nut (12) has at least one cutout (38), through which balls (24) of the ball screw drive (10) can pass, for the purpose of deflecting said balls (24), wherein the ball screw drive (10) has a ball deflector for deflecting the balls (24), wherein the ball deflector is a constituent part of a shaft-hub connection between the ball screw nut (12) and the torque-transmission element (28), wherein the ball deflector is designed to fix the torque-transmission element (28) in a use position in an axial direction relative to the axis of the ball screw nut (12), **characterized in that** the ball deflector has a securing region (30), which is designed, when the torque-transmission element (28) is applied to the ball screw nut (12), to initially be displaced from a starting position counter to an elastic restoring force and, once the torque-transmission element (28) has reached the use position, to assume a securing position on account of the elastic restoring force and thus to fix the torque-transmission element (28) in a form-fitting manner in its use position in an axial direction relative to the ball screw nut (12).

2. Ball screw drive (10) according to Claim 1, **characterized in that** the securing region (30) is integrally formed on the ball deflector and the elastic restoring force is generated by the elastic deformation of a connecting region (32), which connects the securing region (30) to the ball deflector.

3. Ball screw drive (10) according to Claim 1 or 2, **characterized in that** the ball screw drive (10) is configured in such a manner that the securing region (30) is displaced from the starting position in a circumferential direction relative to the axis of the ball screw nut (12).

4. Ball screw drive (10) according to one of the preceding claims, **characterized in that** the ball deflector has, in order to fasten the ball deflector to the ball screw nut (12), at least one fastening region (34), which is integrally formed on the ball deflector and engages in a recess (36) in the ball screw nut (12), said recess being spatially separated from the at least one cutout (38) through which the balls (24) can pass.

5. Ball screw drive (10) according to Claim 4, **characterized in that** the fastening region (34) is fastened in the recess (36) by a force fit, wherein the fastening region (34) is elastically deformed while generating a restoring force when the ball deflector is being fastened to the ball screw nut (12), and the force fit is effected by the restoring force.

6. Ball screw drive (10) according to Claim 4 or 5, **characterized in that** the ball deflector has a multi-part design, wherein at least two parts (16, 18, 20, 22, 40, 42) of the ball deflector jointly form at least a portion of a channel (26) guiding the balls (24), wherein a first of the two parts (40) is fastened to the ball screw nut (12) by means of the second of the two parts (42).

7. Ball screw drive (10) according to one of Claims 4 to 6, **characterized in that** the ball deflector is designed to transmit a torque from the torque-transmission element (28) to the ball screw nut (12), wherein the ball screw drive (10) is configured in such a manner that at least some of the torque transmitted by the ball deflector is transmitted from the ball deflector to the ball screw nut (12) via the at least one fastening region (34).

8. Motor vehicle steering system having a ball screw drive (10) according to one of the preceding claims and an electric drive for effecting and/or assisting the steering movement.

## Revendications

1. Vis d'entraînement à billes (10) avec un écrou fileté à billes (12) et un élément de transmission de couple (28), notamment une poulie de courroie, reçu sur l'écrou fileté à billes (12) pour transmettre un couple à l'écrou fileté à billes (12), l'écrou fileté à billes (12) présentant au moins un évidement (38) pouvant être traversé par des billes (24) de la vis d'entraînement à billes (10) dans le but de dévier ces billes (24), la vis d'entraînement à billes (10) présentant un renvoi de billes pour dévier les billes (24), le renvoi de billes faisant partie d'une liaison arbre-moyeu entre l'écrou fileté à billes (12) et l'élément de transmission de couple (28), le renvoi de billes étant configuré pour fixer l'élément de transmission de couple (28) dans une position d'utilisation dans la direction axiale par rapport à l'axe de l'écrou fileté à billes (12), **caractérisé en ce que** le renvoi de billes présente une zone de blocage (30) configurée pour, lors de l'application de l'élément de transmission de couple (28) sur l'écrou fileté à billes (12), être tout d'abord déplacé d'une position initiale à l'encontre d'une force de rappel élastique et, lorsque l'élément de transmission de couple (28) atteint la position d'utilisation, prendre une position de blocage en raison de la force de rappel élastique et fixer ainsi l'élément de transmission de couple (28) par complémentarité de forme dans sa position d'utilisation dans la direction axiale par rapport à l'écrou fileté à billes (12).

2. Vis d'entraînement à billes (10) selon la revendication 1, **caractérisée en ce que** la zone de blocage (30) est formée sur le renvoi de billes et la force de rappel élastique est générée par la déformation élastique d'une zone de liaison (32) qui relie la zone de blocage (30) au renvoi de billes.

3. Vis d'entraînement à billes (10) selon la revendication 1 ou 2, **caractérisée en ce que** la vis d'entraînement à billes (10) est conçue de telle sorte que la zone de blocage (30) est déplacée de la position initiale dans la direction circonférentielle par rapport à l'axe de l'écrou fileté à billes (12).

4. Vis d'entraînement à billes (10) selon l'une quelconque des revendications précédentes, **caractérisée en ce que** le renvoi de billes présente, pour la fixation du renvoi de billes à l'écrou fileté à billes (12), au moins une zone de fixation (34) formée sur le renvoi de billes, qui s'engage dans une cavité (36) dans l'écrou fileté à billes (12), qui est séparée dans l'espace de l'au moins un évidement (38) pouvant être traversé par les billes (24).

5. Vis d'entraînement à billes (10) selon la revendication 4, **caractérisée en ce que** la zone de fixation (34) est fixée dans la cavité (36) par une adhérence, la zone de fixation (34) étant déformée élastiquement lors de la fixation du renvoi de billes à l'écrou fileté à billes (12) en générant une force de rappel et l'adhérence étant provoquée par la force de rappel.

6. Vis d'entraînement à billes (10) selon la revendication 4 ou 5, **caractérisée en ce que** le renvoi de billes est réalisé en plusieurs parties, au moins deux parties (16, 18, 20, 22, 40, 42) du renvoi de billes formant ensemble au moins une section d'un canal (26) guidant les billes (24), une première des deux parties (40) étant fixée à l'écrou fileté à billes (12) au moyen de la deuxième des deux parties (42).

7. Vis d'entraînement à billes (10) selon l'une quelconque des revendications 4 à 6, **caractérisée en ce que** le renvoi de billes est réalisé pour transmettre un couple de l'élément de transmission de couple (28) à l'écrou fileté à billes (12), la vis d'entraînement à billes (10) étant conçue de telle sorte qu'au moins une partie du couple transmis par le renvoi de billes soit transmise du renvoi de billes à l'écrou fileté à billes (12) par l'intermédiaire d'au moins une zone de fixation (34) .

8. Direction de véhicule automobile avec une vis d'entraînement à billes (10) selon l'une quelconque des revendications précédentes et un entraînement électrique pour provoquer et/ou assister le mouvement de direction.
